(19) Europäisches Patentamt
European Patent Office
Office européen des brevets

(11) **EP 2 725 452 A1**

(12) **EUROPEAN PATENT APPLICATION**

(43) Date of publication:
30.04.2014 Bulletin 2014/18

(51) Int Cl.:
*G06F 1/32* (2006.01)          *H02J 3/14* (2006.01)
*G06Q 50/06* (2012.01)

(21) Application number: 12275164.7

(22) Date of filing: 25.10.2012

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **Energy management**

(57)     An electrical socket (9) and method, comprising: means (46) allowing a user to input load categorisation information (for example categorising the load as schedulable and/or interruptible) relating to a load plugged into the socket (9); and means for communicating the categorisation information to an energy management system (8). Also, energy management apparatus and method, comprising: receiving load categorisation information from one or more electrical sockets (9); and controlling provision of electricity to the one or more electrical sockets (9) according to a schedule determined at least in part according to the received load categorisation information. The one or more processors (26) may be further arranged to learn one or more characteristics of a load plugged into one of the electrical sockets (9), such as how much energy the load requires and/or how long the energy is required for.

## Fig. 2

**Description**

FIELD OF THE INVENTION

The present invention relates to energy management. The present invention relates in particular to, but is not limited to, management of electrical energy supply to and from entities such as homes.

BACKGROUND

In conventional energy supply arrangements, such as electrical supply grids, energy is supplied via a grid to entities such as homes.
Conventionally, electrical loads in the homes are not differently characterised.
US 2012/0053741A1 describes an example of an electrical consumption control scheme in which electrical consumption of multiple appliances within a home are controlled such as to consume electricity according to a hierarchy in order to avoid exceeding a user defined supply limit. The hierarchy is described in terms of disabling, reducing or increasing consumption of one or more appliances in the home.
Turning to a further matter, at entities, such as homes, connected to a supply grid, the local generation of electricity in addition to the receiving of energy from the grid, is known. For example, solar panels may be used to generate electricity at a home. One example is provided by the arrangement described in the above mentioned US 2012/0053741A1.
In general it is also known for surplus locally generated energy from such homes to be put into the grid for general distribution.

SUMMARY OF THE INVENTION

The present inventors have realised that a limitation of arrangements such as those described above is that any given appliance whose supply is to be controlled needs to have its energy supply characteristics known and also needs to be connected to a predefined and fixed electrical socket at a corresponding predefined and fixed location in the home.
The present inventors have also realised that it would be desirable to introduce scheduling and devise more subtle control options compared to the relatively coarse hierarchy approach described in US 2012/0053741A1.
The present inventors have also realised it would provide advantages, including advantages related to load or supply balancing, if surplus locally generated electricity from one entity e.g. home could be in effect (i.e. "virtually") directly supplied to a different entity e.g. home, moreover without need of a physical mediator storage device storing the surplus energy.
In a first aspect, the present invention provides an electrical socket, comprising: user input means adapted to allow a user to input load categorisation information relating to a load plugged into the socket; and communication means for communicating the categorisation information to an energy management system.
The categorisation information may comprise categorisation of the load as schedulable.
The categorisation information may comprise categorisation of the load as interruptible.
In a further aspect, the present invention provides energy management apparatus, comprising: means to receive load categorisation information from one or more electrical sockets according to any of the above aspects; and one or more processors arranged to control provision of electricity to the one or more electrical sockets according to a schedule determined at least in part according to the received load categorisation information.
The one or more processors may be further arranged to learn one or more characteristics of a load plugged into one of the electrical sockets.
The one or more characteristics may comprise how much energy the load requires.
The one or more characteristics may comprise how long the energy is required for.
The one or more processors may be further arranged such that the schedule is further determined at least in part according to an output level of a local electricity generator.
The one or more processors may be further arranged such that the schedule is further determined at least in part according to a level of energy stored in an energy storage system.
In a further aspect, the present invention provides an energy management arrangement, comprising: an energy management apparatus according to any of the above aspects; and one or more electrical sockets according to any of the above aspects.
In a further aspect, the present invention provides an energy management method, comprising: receiving load categorisation information from one or more electrical sockets according to any of the above aspects; and one or more processors controlling provision of electricity to the one or more electrical sockets according to a schedule determined at least in part according to the received load categorisation information.

In a further aspect, the present invention provides a method for managing required output from an electricity supplier supplying electricity via a supply grid to a plurality of entities, the method comprising at least one of the entities controlling its energy demand in response to user inputs categorising individual loads at the entity, the user inputs being input at the entity using one more sockets according to any of the above aspects.

The method may further comprise a first one of the entities exporting electricity in to the supply grid and a second one of the entities importing electricity from the supply grid in response thereto.

In a further aspect, the present invention provides an energy supply system, comprising: an electricity supplier; a supply grid; and a plurality of entities; at least some of the entities comprising an energy management arrangement according to any of the above aspects.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the above aspect.

BRIEF DESCRIPTION OF THE DRAWINGS

Figure 1 is a schematic illustration (not to scale) of an electricity supply arrangement;

Figure 2 is a schematic illustration (not to scale) of a smart socket;

Figures 3-8 show simulation results plots of Energy in kW per $\mu$ (y-axis) against time (x-axis) over a period of 24 hours;

Figure 9 shows simulation results plots of Energy in kW per $\mu$ (y-axis) against time (x-axis) over a period of 1 week;

Figure 10 shows an example of possible energy capacities of storage systems in different homes, in the form of plots of Energy in storage at each $\mu$ in units of KW (y-axis) against time (x-axis) over a period of 1 week;

Figure 11 is a schematic illustration of elements of a graphical user interface (GUI) 111 (or a simple display without user input capability) that may optionally be provided at a broker module 6 - Figure 11 may also be considered as a high level graphical representation of aspects of a brokering process performed by a broker module; and

Figure 12 shows a simulation result of a simulation based on a broker module controlled determination and energy import/export sharing process, in the form of a plot of (y-axis, in units of kW) the difference between the Energy required from an electricity supplier without energy sharing and the Energy required from the electricity supplier with energy sharing, against time (x-axis) over a period of 1 week.

DETAILED DESCRIPTION

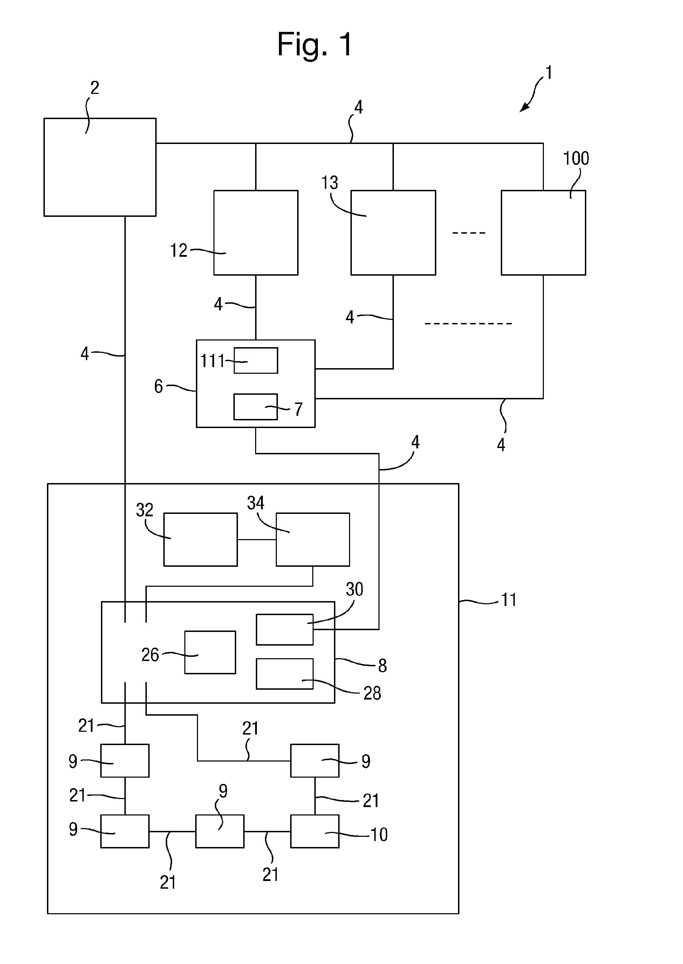

Figure 1 is a schematic illustration (not to scale) of an electricity supply arrangement 1 in which a first embodiment may be implemented.

In this embodiment the electricity supply arrangement 1 comprises an electricity supplier 2 electrically coupled via a supply grid 4 to a plurality of homes, namely a first home 11, a second home 12, a third home 13, and any required further number of homes (not shown) through to an Nth home 100.

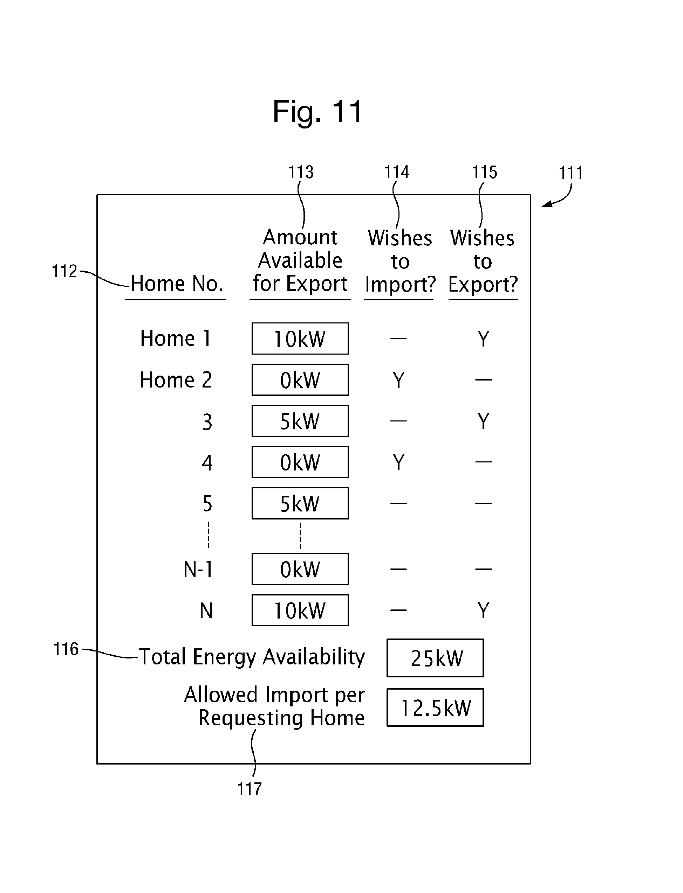

The electricity supply arrangement 1 further comprises a broker module 6. Each of the first to Nth homes 11, 12, 13, ...100 is electrically coupled to the broker module 6. The broker module 6 comprises one or more processors 7 and a graphical user interface (GUI) 111. Operation of the broker module 6, as described later below, is under control of the one or more processors 7. The GUI 111 will be described in more detail later below with reference to Figure 11.

It will be appreciated that the electricity supplier 3 may be electrically coupled over the supply grid 4 or over other supply grids (not shown) to many other homes (not shown) that are not electrically coupled to the broker module 6. Such homes may be coupled to other broker modules (not shown) or may not be connected to any broker module at all.

Figure 1 also shows certain details of the electricity supply arrangement in the first home 11, as follows.

The first home 11 comprises an energy management system module 8 (hereinafter referred to as the EMS 8). The EMS 8 is electrically coupled to the electricity supplier 2 via the supply grid 4.

The first home 11 also comprises a home wiring grid 21. The EMS 8 is electrically coupled to the home wiring grid 21.

The first home also comprises a plurality of smart sockets 9. The EMS 8 is electrically coupled to the plurality of smart sockets 9 via the home wiring grid 21.

The first home 11 also comprises a local electricity generator 32, which in this example is a solar panel installation. The first home 11 also comprises a storage system 34. The local electricity generator 32 and the storage system 34 are electrically and/or operatively coupled to each other, and to the EMS 8 including to a locally generated module 30 that is described later below, such that, under the control of the EMS 8 in general and/or the locally generated electricity module 30, electricity being generated at the local electricity generator 30 and/or electricity stored at the storage system 34 can be input to the home wiring grid 21 and/or the supply grid 4, as will be described in more detail later below.

The storage system 34 allows the storing of electricity that is generated by the local electricity generator 32 that is not consumed immediately after generation by the home 11. As will be described in more detail later below, the stored energy may be used to reduce the import of energy from the grid by allowing the energy stored to be used by the home at times of peaks in energy demand. As will also be described in more detail later below, the storage system 34 may in addition or instead play a role in a process of sharing of energy between different homes.

In this embodiment the storage system 34 comprises a Zinc-Bromine (ZnBr) Flow Battery. One possibility is a ZnBr battery based on the design presented in P. C. Butler, P. A. Eidler, P. G. Grimes, S. E. Klassen, and R. C. Miles, "Zinc/Bromine Battery", Handbook of Batteries, Ed. D. Linden, T. B. Reddy, 3rd Editions, pp 39.1 - 39.20, 2001, the contents of which are incorporated herein by reference. The battery comprises two stack towers, each containing two 54 cell bipolar stacks connected in series, two electrolyte tanks and associated pumping systems, and control and cooling systems. It has a maximum power at 50% state of charge at approximately 40kW (the maximum instantaneous output that the storage system 34 of this embodiment can deliver). The battery has 100kWh of energy storage capacity. It will be appreciated that in other embodiments other types of storage system may be used additionally or instead.

The smart sockets 9 are electrical sockets at which appliances can be plugged into the electricity supply that is supplied to them via the home wiring grid 21 under the control of the EMS 8. The smart sockets 9 will be described in more detail below. In this embodiment the first home 11 also comprises one or more conventional electrical sockets 10 connected via the home wiring grid 21 to the EMS, although in other embodiments these need not be included.

In this embodiment the EMS 8 comprises one or more processors 26, a graphical user interface 28 (hereinafter referred to as a GUI 28), and a locally generated electricity module 30. In other embodiments the GUI may be omitted. The processor(s) 26, the GUI 28, and the locally generated electricity module 30 are all operatively coupled to each other. Operation of the EMS 6, including if required the locally generated electrical module (although this may alternatively have its own one or more processors) as described later below, is under control of the one or more processors 26.

The locally generated electricity module 30 is also electrically coupled to the local electricity generator 32. The locally generated electricity module 30 is also coupled to the broker module 6 via the supply grid 4, which may be via a separate part of the supply grid 4 compared to the main coupling provided between the electricity supplier 2 and the EMS 8.

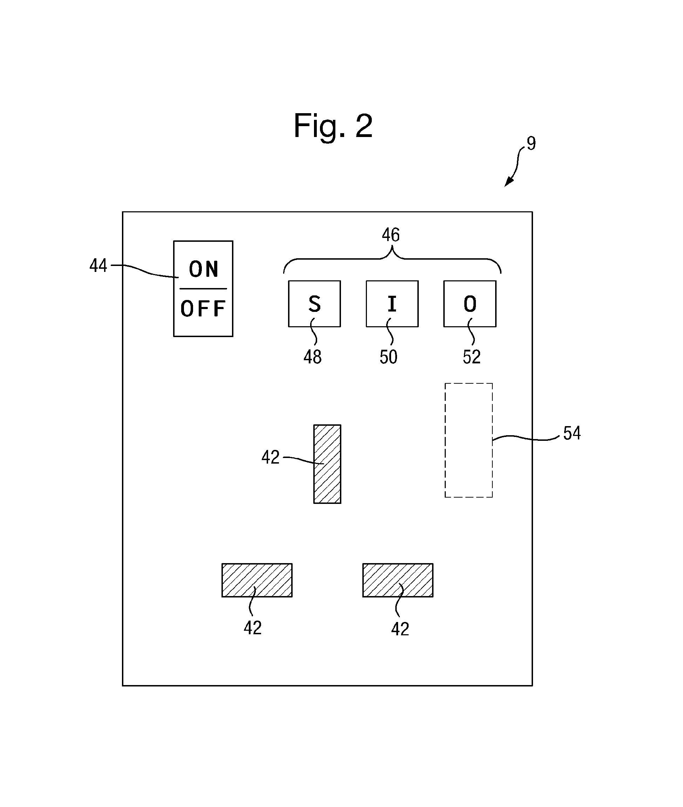

The smart sockets 9 will now be described in more detail, with reference to Figure 2. Figure 2 is a schematic illustration (not to scale) of an embodiment of the smart socket 9. The smart socket 9 is the same as a conventional electric plug socket, except where described otherwise in the following.

In this embodiment the smart socket 9 comprises three terminal slots in conventional fashion, for accepting the terminals of a mains plug of an appliance to be connected to the electricity supply. Also in conventional fashion the smart socket 9 further comprises an on/off switch 44.

In addition to what is provided on conventional sockets, in this embodiment the smart socket further comprises a user input arrangement 46, which in more detail in this embodiment comprises a first user input key 48, a second user input key 50, and a third user input key 52. In this embodiment the first user input key 48 allows a user to input the information that an appliance connected to the socket is a schedulable load, and the second user input key 50 allows a user to input the information that an appliance connected to the socket is an interruptible load, as will be described in more detail later below. In this embodiment the third user input key 52 allows a user to override the effects of any previous entry via the first user input key 48 or the second user input key 50. It will be appreciated that in other embodiments the user input arrangement may take any desired form, including one or more GUIs, touch screens, or a menu-scroll input approach, or dials, or additional input keys, and so on.

Further in addition to what is provided on conventional sockets, in this embodiment the smart socket comprises a processor 54 that processes controls user inputs and controls or otherwise processes communication with the EMS 8.

In this embodiment, in operation the electricity supply arrangement 1 operates as follows.

First operation of the smart sockets 9 in this embodiment will be described by describing one such smart socket 9. The smart socket 9 is provided with functionality as follows such that the smart socket 9:

(i) allows the categorisation (and learning of such categorisation by the EMS 8) of a new load connected to the socket. This allows the users to place or connect schedulable and/or interruptible loads wherever they are required in the home (as will be described in more detail later below);

(ii) forwards the categorisation and energy demand information to the EMS 8 (preferably, as in this embodiment, this communication is performed using modulated communication signals via the power home wiring grid 21, however this need not be the case, and in other embodiments other forms of communication may be employed between the smart socket 9 and the EMS 8, for example by wireless communication); and

(iii) presents energy to the connected load when the EMS allows/instructs it to do so.

When a user plugs a load into the smart socket 9, a signal is forwarded from the smart socket 9 to the EMS 8 to indicate the detection of a new load. With each new connection, the user may select and input, via the user input arrangement 46, that the category of the appliance is that of a schedulable load or that the category of the appliance is that of an interruptible load (by pressing either the first input key 48 or the second input key 50 respectively). This information is also forwarded from the smart socket 9 to the EMS 8.

If neither option is selected/input, the EMS 8 categorises the load as a non-flexible load and then controls energy supply to the smart socket according to the protocol that energy must be presented when the load is switched on (by the user pressing the on/off switch 44 to the on mode).

If either the schedulable load option or the interruptible load option is selected/input, the EMS 8 first learns the characteristics of the newly connected load (for example, how much energy the load requires and for how long for each use) by first operating the load as a non-flexible load.

Also, in this embodiment the user is prompted via the GUI 28 of the EMS 8 to key in a deadline for the load at the GUI 28. In other embodiments, the user input arrangement 46 at the smart socket 9 may additionally or instead include means for entering the deadline information and any other applicable information, and the smart socket 9 communicates corresponding user inputs to the EMS 8. If no deadline is entered by the user, a default deadline is determined by the EMS 8. In this embodiment the default deadline is set by the EMS as 12 hours from when the load is switched on is set by the EMS. Advantages of setting the deadline as 12 hours tend to be that typically, flexible loads are switched on (in use and require energy) during out-of office hours (typically between the hours of 18:00 to 07:00 the next day), when users are typically at home, and it tends to be safer if flexible loads are utilised when users are at home.

After the load has been operated for the first time and the EMS 8 has accordingly learnt the characteristics of the newly connected load, going forward, whenever the on/off switch is again pressed to on mode (or the power on button of the load is switched on), the smart socket 9 sends a signal to the EMS 8 to indicate that the load is demanding its energy. The EMS 8 will when provide the required energy to the load via the smart socket 9 taking account of its aim to spread its balance its total energy supply to avoid peaks and taking account of the following further constraints: whether the load has been identified as schedulable or has been identified as interruptible, the characteristics it has learnt of the load, and the deadline value for when the energy must be supplied by.

Preferably, as in this embodiment, the EMS 8 is provided with a learning algorithm, for example an artificial neural network such as described in X. Liu, I. Chilvers, M. Mokhtar, A. Bedford, K. Stitt and J. Yazdani, "Microgrid Development for Properties", in 2nd European Conference on Innovative Smart Grid Technologies (ISGT- EUROPE 2011), 2011, the contents of which are incorporated by reference. Going forward, when the schedulable or interruptible load requires energy and the socket has not detected removal of the plug, the EMS 8 instigates further learning and uses this to attempt to further improve or optimise the operation of the schedulable or interruptible load according to the constraints described above, and the constraints of other appliances connected at other smart sockets 9.

Now operation of the GUI 28 in this embodiment will be described. The GUI 28 is provided with functionality as follows such that the GUI 28:

(i) indicates how much energy is used in the home 11 (per unit hour and total used) and its cost;

(ii) presents a schematic of the location of the smart sockets 9 installed in the home 11 and indicates the characterisation of the load connected to a respective smart socket 9;

(iii) for one, some or all of the smart sockets 9, the GUI 28 indicates:

(a) if the EMS 8 has optimised the scheduling of energy for the connected load;

(b) how much energy is required by the connected load and when;

(c) the duration for which the load requires its energy; and

(d) the deadline by which the load must complete its operation;

(iv) allows the user to input:

(a) the maximum financial cost of energy usage (energy import from the grid) allowed per month; and

(b) the deadlines for the loads;

(v) indicates how much stored locally generated energy is available in the storage system 34; and

(vi) indicates how much energy can be used in the home per unit time $\mu$ (where unit time may be written as $\mu$ and is the process rate of the EMS 8, and in this embodiment u = 5 minutes) according to the input maximum cost of energy use which may be termed $M_C(\mu)$ (in units of kW) for the home 11 . This helps the users adjust their behaviour according to this value.

In this embodiment, Equations (1) and (2) below are used to calculate the value of $M_C(\mu)$:

$$C_h = E_M / N_d [((24 - e) \times 1) + (e \times P_d / P_n)] \qquad \text{Equation (1)}$$

$$M_C(\mu) = (C_h / 60) \mu + R_E \qquad \text{Equation (2)}$$

where $E_M$ is the maximum energy cost allowed per month; $N_d$ is the number of days in the months. If the user is on a tariff such as those commonly known as "economy 7" or "economy 10", then e = 7 or 10, else e = 0; $P_d$ is the peak price per kWh and $P_n$ is the off-peak price per kWh; $C_h$ is the maximum energy (kW) limit in an hour; $\mu$ is the process rate of the EMS 8 which in this embodiment is 5 minutes (the process rate $\mu$ is preferably set between 1 minute and 5 minutes, although this need not be the case); and $R_E$ is the energy output by the local electricity generator 32 in kW per $\mu$.
It will be appreciated that in other embodiments other constraints, including ones not based on $M_C(\mu)$, and/or not according to the above equations and details, may be implemented instead.
Now some parts of the operation of the EMS 8 in this embodiment will be described. The EMS 8 is provided with functionality as follows.
The EMS 8 operates to mitigate how energy is to be presented to schedulable and interruptible loads according to their deadline requirements and other user information, for example tariff information and learnt operational information. In this embodiment the EMS 8 also aims to optimise or otherwise improve how locally generated energy, including energy stored in the storage system 34, is made use of.
In this embodiment a relatively simple rule-based algorithm method is employed by the EMS 8, in which the EMS 8 separates and defines the loads into the following three categories:

(i) non-flexible loads;

(ii) schedulable loads (that are not interruptible); and

(iii) interruptible loads (i.e. these may also be considered as schedulable and interruptible).

These are processed as follows:

(i) <u>The non-flexible loads.</u>

The non-flexible loads are allocated first priority, and energy is provided to these loads when required.

(ii) <u>The schedulable loads.</u>

The schedulable loads are allocated the next highest priority. This is because once energy is provided to this category of load the energy should not be interrupted, and should be provided until the load no longer requires the energy.
Energy will be provided to the schedulable loads when the sum of energy in use for the home is $\leq M_C(\mu)$. If the number of schedulable loads requiring energy is more than one, the load with the slowest deadline will have lowest priority, whereby energy is to be provided to this load only after all the other schedulable loads have completed their operations. An equivalent ranking process is provided for intermediate ones.

If the sum of energy in use for the home is $\geq M_C(\mu)$, the presentation of energy to the schedulable loads is scheduled based on their respective deadlines.

(iii) The interruptible loads.

In this embodiment it is assumed that the interruptible loads have lower energy demand and/or slower deadlines than the schedulable loads. (Moreover in this embodiment, if an interruptible load has a relatively fast deadline, e.g. the total or remaining deadline period is less than a predetermined time, say 1 hour, then the EMS 8 recategorises the load as a non-flexible load.)

An interruptible load is given its required energy only if the sum of energy in use for the home is $\leq M_C(\mu)$. Furthermore, if the sum of energy required by the interruptible loads in addition to other loads required to be supplied at a given time is $> M_C(\mu)$, the loads with the slowest deadline are interrupted and supply to them is resumed only when the sum of energy in the home is $\leq M_C(\mu)$ or the deadline for the load is imminent.

It will be appreciated that in other embodiments variations to the above rule-based algorithm may be made including, for example, the loads being defined in different categories in addition to or instead of those mentioned above. Also, in yet further embodiments more complicated algorithms other than simple rule-based ones may be employed.

Preferably, the loads i.e. appliances in the home comprise demand response functionality, to facilitate reliable switching on/off when energy supply is implemented/paused/stopped according to the control determinations of the EMS 8.

Simulations

Further appreciation of the above embodiments and their potential advantages can be gleaned by consideration of the following simulations and results thereof, as follows.

In the following simulation of operation in one home, the EMS 8 performs its operation every $\mu$ = 5mins. In this simulation the home 11 comprises a number of schedulable and interruptible loads. The loads are:

1) Non-flexible loads - simulated using a random noise generator with mean of 0.15(kW) between 1700-2400hours and 0600-0900hours and 0.05(kWh) in between.

2) The schedulable loads are:

   a) Washing machine which requires 1.5kWh of energy, runs for 1.5 hours and is switched on every day at 1900hour with a deadline till 2230hour.

   b) Dryer which requires 4kWh of energy, runs for 1.5 hours and is switched on every day after the washing machine completes its operation (2230hour) and has a deadline till 1030hour.

   c) Dishwasher requires 1.5kWh of energy, runs for 1.5 hours and is switched on every day at 1900hour with a deadline of 0700hour.

3) The interruptible loads are:

   a) Recharging of two mobile phones, each requires 0.01kWh of energy per charge and with a deadline for charging till 0700hour.

   b) Recharging of two laptop computers, each requires 0.05kWh of energy per charge and with a deadline for charging till 0700hour.

   c) Recharging of two electric cars, one plugged in at 1730hour and the other at 1930hour, and each requiring 220V - 10A for 12 hours per charge and with a deadline for fully charge till 0700 hour.

The output of the local electricity generator 32 (solar panels) is simulated using a random noise generator with mean of 0.5kW between 0800-1800hours.

A storage system 34 is also present, of the type described earlier above.

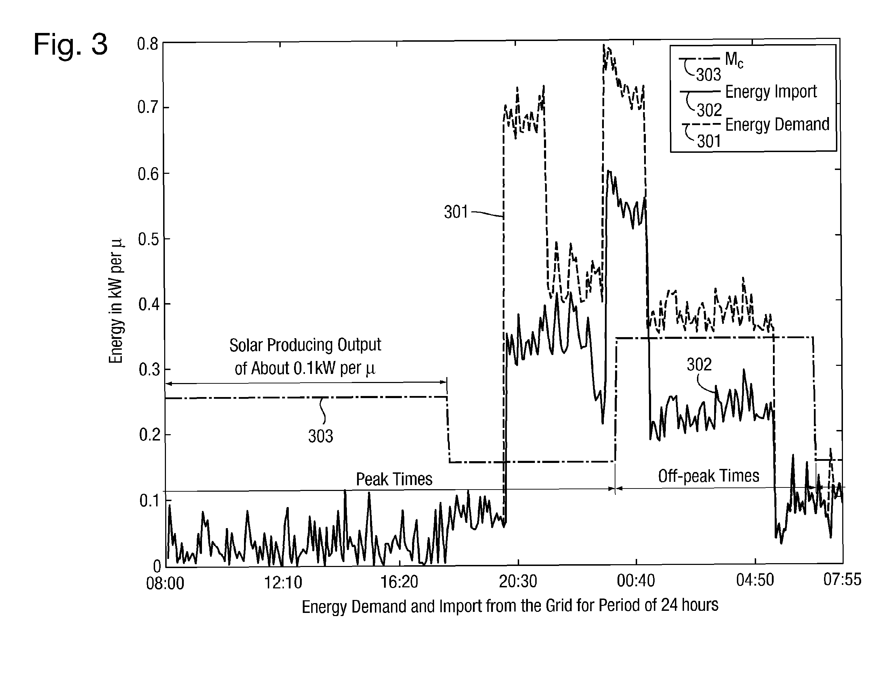

Figure 3 plots Energy in kW per $\mu$ (y-axis) against time (x-axis) over a period of 24 hours. The plot indicated by reference numeral 301 is Energy Demand, the plot indicated by reference numeral 302 is Energy Import, and the plot indicated by reference numeral 303 is $M_C$.

The Energy Demand plot 301 shows how much energy is required by the loads if their demand is not controlled/managed by the EMS 8. The Energy Import plot 302 shows how much energy is imported from the supply grid 4 and used by loads when their demand is managed by the EMS 8.

The effect of the EMS 8 is to shift the energy input to the schedulable loads and interrupts the energy to the interruptible loads, without violating the deadline requirements, when peaks in energy demand (demand exceeding $M_C$) are detected by the EMS 8. The plots of Figure 3 show that the EMS 8 has reduced peaks in energy demand for the home 11.

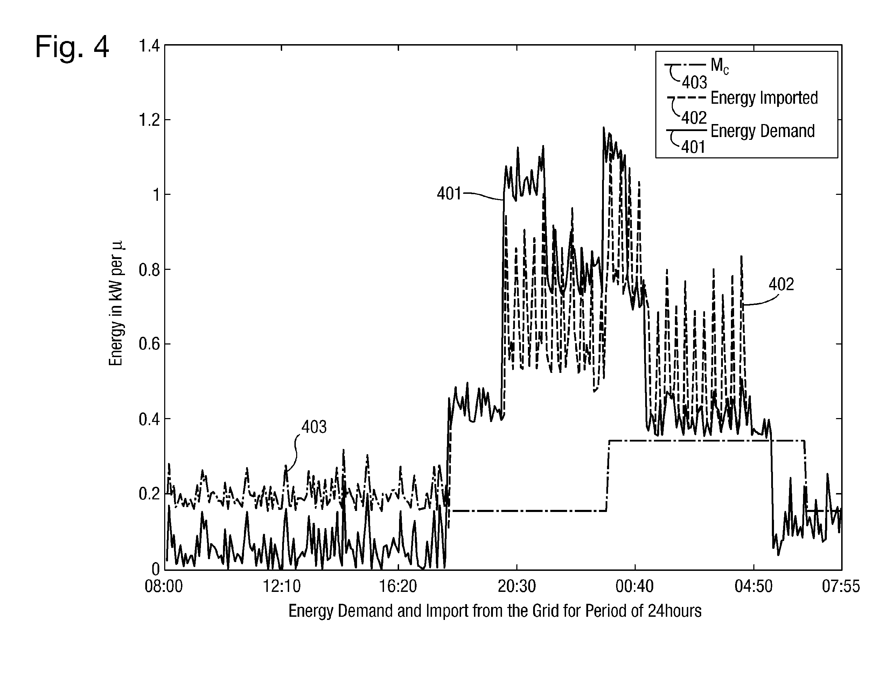

Figure 4 plots Energy in kW per $\mu$ (y-axis) against time (x-axis) over a period of 24 hours. The plot indicated by reference numeral 401 is Energy Demand, the plot indicated by reference numeral 402 is Energy Import, and the plot indicated by reference numeral 403 is $M_C$.

Figure 4 corresponds to Figure 3 except Figure 4 shows the simulation outcome for a home that does not include the storage system 34, i.e. energy generated by the local electricity generator 32 can only be used at the time it is generated. The plots of Figure 4 show that the EMS 8 has reduced peaks in energy demand for the home 11 even without the use of a storage system 34.

The following simulation is of operation in an energy network showing the combined effect on the energy network of the simultaneous implementation of the above embodiments in more than one home.

Plural homes each comprising a respective EMS 8 and associated smart sockets 9 homes are connected into a small low voltage (LV) energy network, as provided for example by the electricity supply arrangement 1 of Figure 1. The simulation evaluates if peaks in energy demand for the network are reduced and/or eliminated.

In this simulation there are ten connected homes with an ESM 8 and smart sockets 9 (i.e. the value of N is N = 10). Details of the homes are as follows:

1) Two out of the ten homes' energy characteristics are as described in the simulation above, one is with a storage system 34 (individual home results as shown in Figure 3) and one is without a storage system 34 (individual home results as shown in Figure 4). The budget for each of these homes' energy usage is = $200 per month (this value, and any other monetary budgets discussed below, may alternatively be specified in a power/time varying formula not necessarily involving monetary value).

2) Two out of the ten homes' energy characteristics are also as described in the simulation above, but the schedulable loads are switched on an hour later than is the case for the two previous homes. Again, one is with a storage system 34 and one is without a storage system 34. Again, the budget for each of these two homes' energy usage is = $200 per month.

3) Two out of the ten homes' energy characteristics are that of a single occupancy home, for which:

a) Non-flexible loads - are simulated using a random noise generator with mean of 0.15(kW) between 1700-2400hours and 0600-0900hours and 0.05(kWh) in between.

b) Schedulable loads - these require energy (only) every three days:

i) Washing machine which requires 1.5kWh of energy runs for 1.5 hours and is switched on at 1900hour with a deadline till 2230hour on those days when it is operated.

ii) Dryer which requires 4kWh of energy, runs for 1.5 hours and is switched on (on those days when it is operated) after the washing machine completes its operation (2230hour) and has a deadline till 1030hour.

iii) Dish washer requires 1.5kWh of energy, runs for 1.5 hours and is switched on (on those days when it is operated) at 1900hour with a deadline of 0700hour.

c) Interruptible loads - these require energy each day, and are:

i) Recharging of two mobile phones, each requires 0.01kWh of energy per charge and with a deadline for charging till 0700hour.

ii) Recharging of two laptops, each requires 0.05kWh of energy per charge and with a deadline for charging till 0700hour.

iii) Recharging of an electric cars, plugged in at 1930hour, requiring 220V - 10A for 12 hours per charge and with a deadline for fully charge till 0700hour.

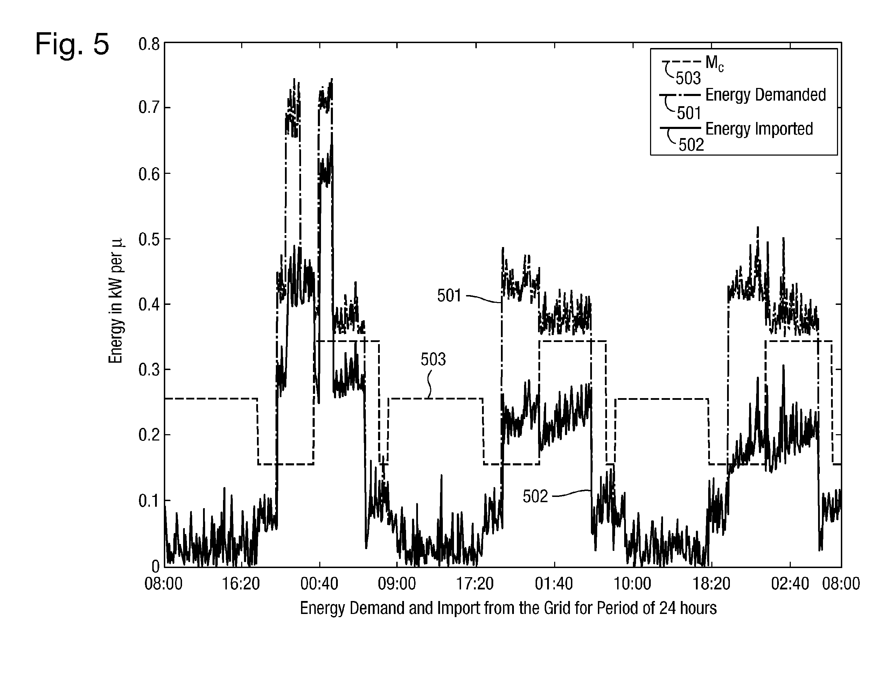

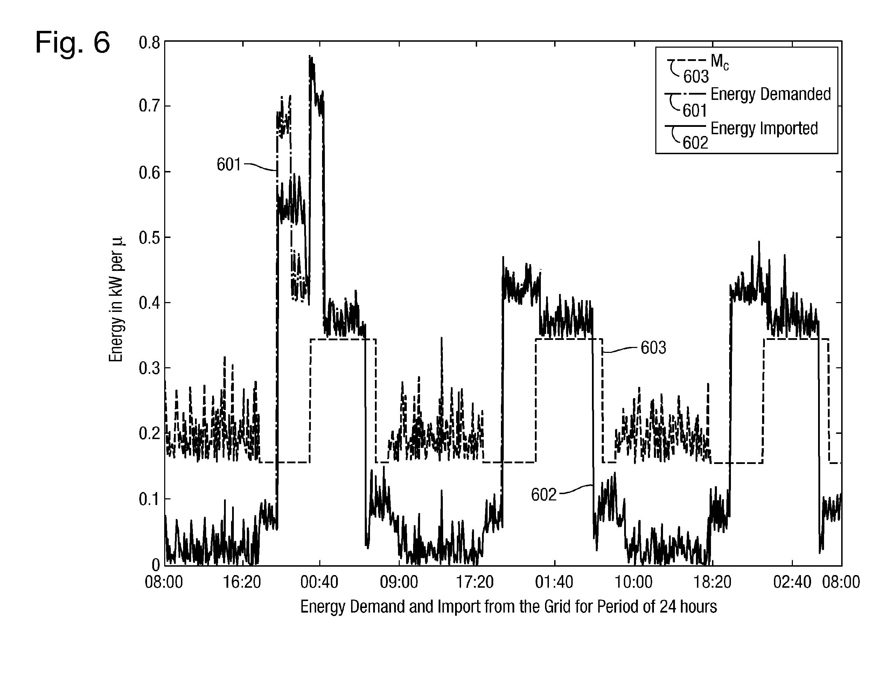

Again, one is with a storage system 34 and one is without a storage system 34. The individual simulation results for the home with a storage system are shown in Figure 5. Figure 5 plots Energy in kW per $\mu$ (y-axis) against time (x-axis) over a period of 24 hours. The plot indicated by reference numeral 501 is Energy Demand, the plot indicated by reference numeral 502 is Energy Import, and the plot indicated by reference numeral 503 is $M_C$. The individual simulation results for the home without a storage system are shown in Figure 6. Figure 6 plots Energy in kW per $\mu$ (y-axis) against time (x-axis) over a period of 24 hours. The plot indicated by reference numeral 601 is Energy Demand, the plot indicated by reference numeral 602 is Energy Import, and the plot indicated by reference numeral 603 is $M_C$. The budget for each of these two homes' energy usage is = $150 per month.

4) Two out of the ten homes' energy characteristics are as the two single occupancy homes described in section 3) immediately above, except that their schedulable loads are switched on an hour later. Again, one is with a storage system 34 and one is without a storage system 34. Again, the budget for each of these two homes' energy usage is = $150 per month.

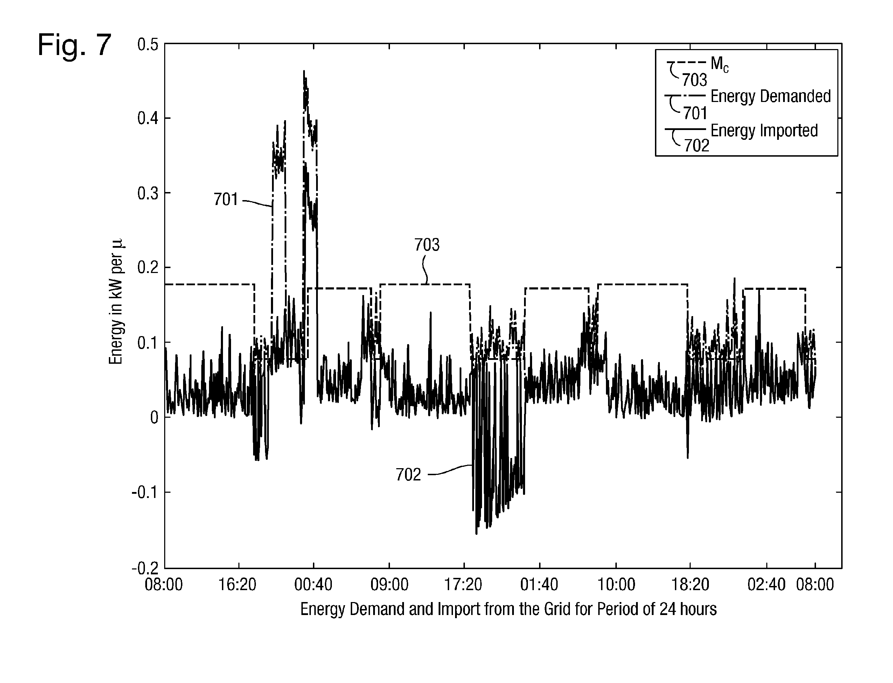

5) The ninth home's energy characteristics are the same as those homes in 3) and 4) above that do have a storage system 34, except the occupier does not have an electric car. The individual simulation results for this home are shown in Figure 7. Figure 7 plots Energy in kW per $\mu$ (y-axis) against time (x-axis) over a period of 24 hours. The plot indicated by reference numeral 701 is Energy Demand, the plot indicated by reference numeral 702 is Energy Import, and the plot indicated by reference numeral 703 is $M_C$. The budget for energy usage = $100 per month.

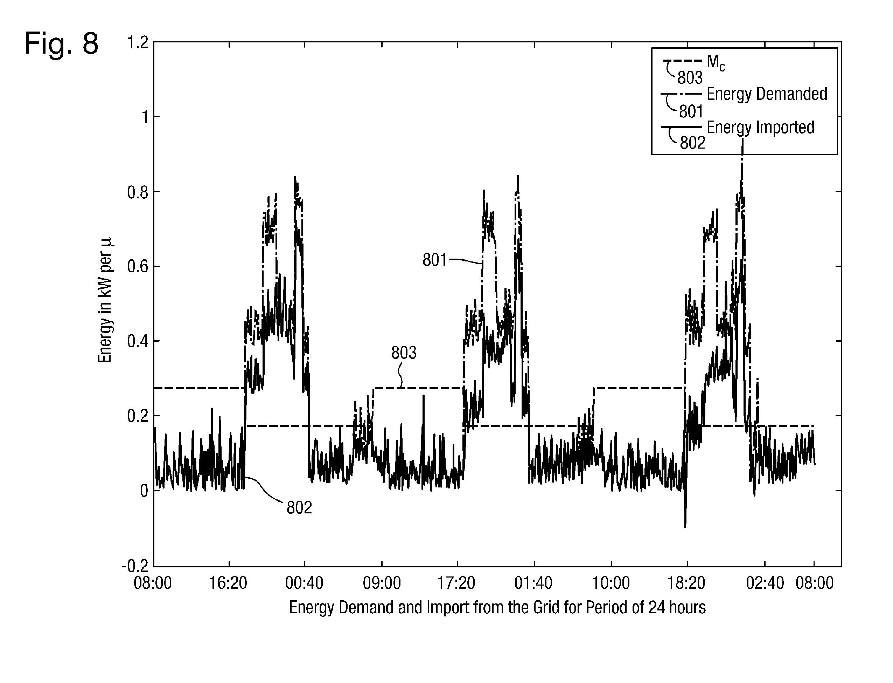

6) The tenth home's energy characteristics are the same as those homes in 1) and 2) above that do have a storage system 34, except there is only one electric car for this home, plugged in at 1730hour. The individual simulation results for this home are shown in Figure 8. Figure 8 plots Energy in kW per $\mu$ (y-axis) against time (x-axis) over a period of 24 hours. The plot indicated by reference numeral 801 is Energy Demand, the plot indicated by reference numeral 802 is Energy Import, and the plot indicated by reference numeral 803 is $M_C$. The budget for energy usage = $150 per month.

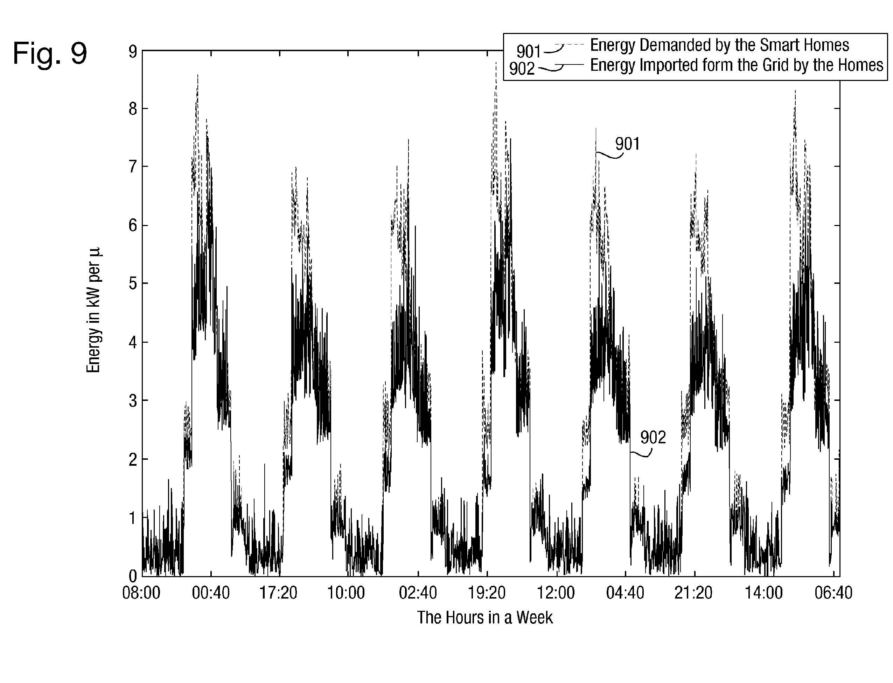

Results from the above described simulation showing the combined effect on the energy network of the simultaneous implementation of the above embodiments in more than one home, in this example ten homes i.e. N = 10, are shown in Figure 9. Figure 9 plots Energy in kW per $\mu$ (y-axis) against time (x-axis) over a period of 1 week. The plot indicated by reference numeral 901 is Energy Demand, and the plot indicated by reference numeral 902 is Energy Import.

The Energy Demand plot 901 shows how much energy is required in total by the loads of the plural homes if their demand is not controlled/managed by the EMS 8. The Energy Import plot 902 shows how much energy is in fact imported from the supply grid 4 and used by loads, i.e. what energy the network must supply, when the demand of the loads of the plural homes is managed by the EMS 8.

As can be seen in Figure 9, peaks in energy demand from the network are reduced.

In the following embodiment, as well as the arrangements and procedures described above, locally generated electricity as produced by apparatus such as the local electricity generator 32 described above and/or being stored at the storage system 34 described above is shared between different homes. In this embodiment this process is controlled by the broker module 6, which communicates with the locally generated electricity module 30 of the EMS 8 of each home participating in the sharing arrangement/process. Such an arrangement/process tends to advantageously further reduce peaks in the supply required to be provided by the supply network, as well as making more efficient use of the homes' local electricity generation.

The communication includes providing a handshake agreement facility between those homes that wish to export surplus locally generated electricity and those homes which wish to import such electricity. In this embodiment the broker module 6 facilitates this but does not itself need to store energy for transferring between homes. This is advantageous as the broker module just comprises processing type capability not electrical energy transfer capabilities, and furthermore avoids or alleviates security issues (e.g. potential for theft) as the electrical energy being transferred from one home to another is not actually stored at the broker module 6). In this embodiment the electricity being shared is transferred in a virtual sense in that an agreed amount is put back into the supply grid 4 by the home exporting the surplus energy and the corresponding amount is taken from the supply grid 4 by the home importing the surplus energy. This tends to provide a further advantage in that the net level of the electricity in the supply grid 4 is not changed although the importing home is nevertheless receiving an increase amount of electrical energy.

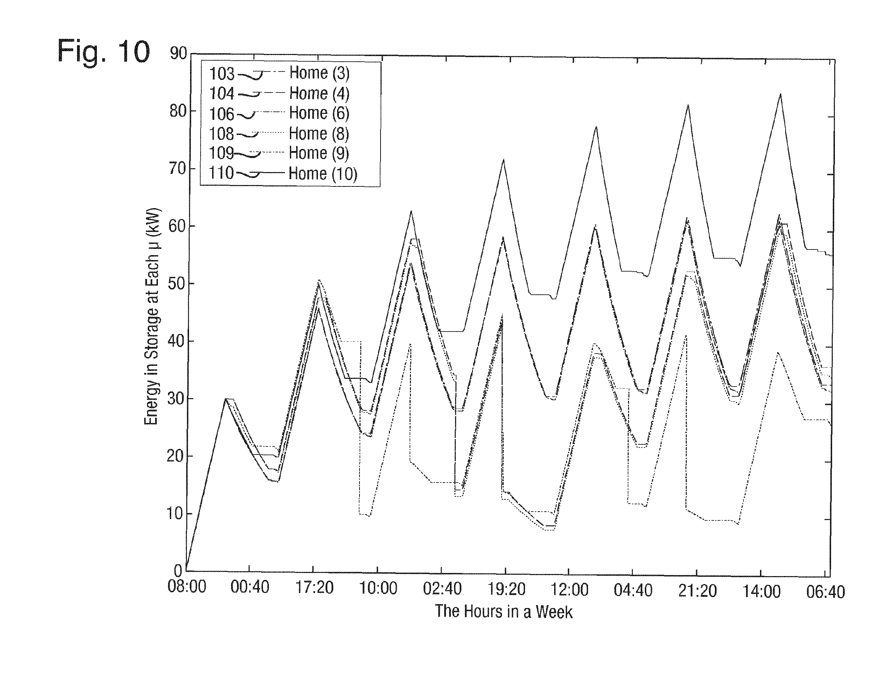

Figure 10 shows an example of possible energy capacities of storage systems 34 in different homes where this embodiment may be beneficially employed. In particular Figure 10 plots, separately for each home, Energy in storage at each $\mu$ in units of KW (y-axis) against time (x-axis) over a period of 1 week. The different plots indicated by reference numerals 103, 104, 106, 108, 109 and 110 are for different homes numbered (arbitrarily and not in correlation with the home identification numbers given below in relation to Figure 11) homes 3, 4, 6, 8, 9 and 10 respectively. A large drop in energy indicates that the home has exported its surplus stored energy to the grid.

When a home wishes to export energy, the locally generated electricity module 30 of the home's EMS 8 communicates this to the broker module 6. Energy will not be exported out from the home until the broker module 6 has brokered a situation where a different home wishes to import some or all of the offered amount of surplus energy. When such a process of brokering is implemented by the broker module 6, in response to a locally generated electricity module 30 of a different home's EMS 8 communicate this wish to import to the broker module 6, the broker module 6 authorises or instructs the exporting home's locally generated electricity module 30 to export the relevant amount of electricity, and correspondingly authorises or instructs the importing home's locally generated electricity module 30 to import the relevant amount of electricity. In this embodiment, which candidate homes will provide the energy export and receive energy import when the total export availability/import demand is not equal is based on a simple first come first served basis, but in other embodiments other more refined allocation algorithms may be employed by the broker module 6.

Figure 11 is a schematic illustration of elements of a graphical user interface (GUI) 111 (or a simple display without user input capability) that may optionally be provided at the broker module 6 (and/or may be provided elsewhere). (Figure 11 may also be considered as a high level graphical representation of aspects of the brokering process performed by the broker module 6.)

The GUI 111 comprises: a list of Homes 112 identified by a respective home number; a presentation 113 for each home of the amount of energy (per $\mu$), if any, it currently has available for export; an indicator 114 for each home that indicates whether the respective home wishes to import energy (this example shows "Y" if the answer is yes); an indicator 115 for each home that indicates whether the respective home wishes to export energy (this example shows "Y" if the answer is yes); a presentation of the total energy availability for export 116 i.e. the sum of the individual amounts of the individual homes' energy available for export; and a presentation of the allowed import per requesting home 117 which is calculated as described below. It is noted the home numbers given by way of example in Figure 11 are arbitrary and do not necessarily correspond to home numbers detailed earlier above in relation to any of Figures 1 to 10.

In the example scenario shown in Figure 11, at a given instance in time (or the information may be changed only each time a new time period $\mu$ is entered, in which case the scenario shown in Figure 11 would apply to a given time period $\mu$), the GUI 111 shows that Homes 1 and N can commit to export 10kW of energy each, Home 3 can commit only 5kW of energy (5kW and 10kW are the specified allowed size amounts in this embodiment), Homes 2 and 4 wish to import energy, and Homes 5 to (N-1) do not wish to either import or export energy. In this scenario the broker module 6 determines that the total amount of energy available for export 116 is 25kW and determines that since two homes wish to import electricity the allowed import per requesting home 117 is 12.5kW each (i.e. 25kW/2 = 12.5kW). As described earlier, accordingly the broker module 6 authorises or instructs the locally generated electricity modules 30 of the EMSs 8 of the relevant homes to export/import these amounts to/from the supply grid 4. In response to this authorisation or instruction the EMSs 8 carry out the specified export/import of electricity to/from the supply grid 4 i.e. in this example Homes 1 and N export 10kW of energy each, Home 3 exports 5kW, and Homes 2 and 4 import 12.5kW of energy each.

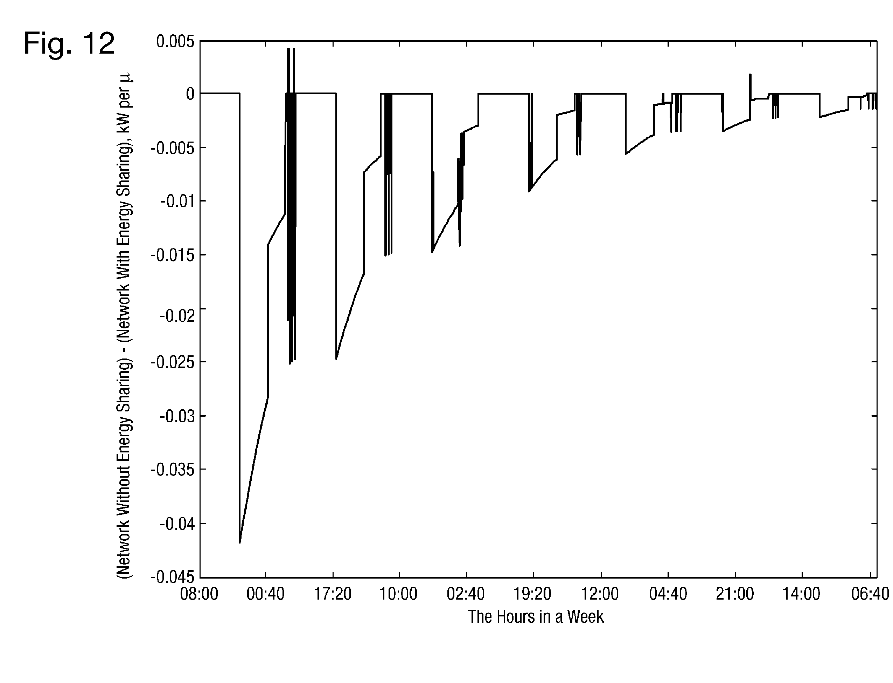

Figure 12 shows the result of a simulation based on the broker module 6 controlled determination and energy import/export procedures described above. In particular Figure 12 plots (y-axis, in units of kW) the difference between the Energy required from the electricity supplier without energy sharing and the Energy required from the electricity supplier with energy sharing, against time (x-axis) over a period of 1 week. Thus Figure 12 shows the net effect, on the requirement for the electricity supplier 2 to input energy to the supply grid 4, of the inclusion in the operation of electricity supply arrangements such as the electricity supply arrangement 1 described earlier above with reference to Figure 1 of the broker module 6 carrying out the brokering process described above and the modules implementing the resulting determined energy exporting and importing to/from the homes to the supply grid 4. It will be appreciated that advantageously the requirement is reduced and leads to smoother energy supply. Also, the broker module 6 controlled determination and energy import/export procedures described above tend to advantageously reap benefit from the inclusion of scheduling considerations and variation in the load management activity of the EMS 8, and vice-versa, as the import/export procedure tends to accommodate and/or assist the scheduling requirements or ambitions of either or both of the exporting home and the importing home.

In the above embodiments the local electricity generator is a solar panel installation. However, in other embodiments other types of generator may be used in addition or instead to provide the local electricity generator.

In yet further embodiments there is no inclusion of a local electricity generator. Usually this will also mean there is also no storage system included, however this need not be the case, and in further embodiments a storage system may nevertheless be included and used as described above, the energy being stored therein being acquired, for example, by taking energy supply from the supply grid 4 at low cost times from the electricity supplier 2 and/or by importing according to the energy sharing embodiments described above, for example under control of the broker module 6. Indeed, even when a local electricity generator is included, the aforementioned other sources of electricity may be stored in the storage system in addition to or instead of locally generated electricity.

In further embodiments there is no provision of a storage system even if there is a local electricity generator.

In the above embodiments the smart sockets and an associated EMS in an entity such as a home are provided in conjunction with provision of an energy sharing process between such entities as brokered by the broker module. However, this need not be the case, and in other embodiments the smart sockets and associated EMS may be provided without any provision of energy sharing.

Apparatus, including the EMS 8, the locally generated electricity module 30, and the broker module 7, and/or any processors comprised by those items, for implementing the above arrangements and processes, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

**Claims**

1. An electrical socket (9), comprising:

   user input means (46) adapted to allow a user to input load categorisation information relating to a load plugged into the socket (9); and
   communication means for communicating the categorisation information to an energy management system (8).

2. An electrical socket according to claim 1, wherein the categorisation information comprises categorisation of the load as schedulable.

3. An electrical socket according to claim 1 or claim 2, wherein the categorisation information comprises categorisation of the load as interruptible.

4. Energy management apparatus, comprising:

   means to receive load categorisation information from one or more electrical sockets (9) according to any of claims 1 to 3; and
   one or more processors (26) arranged to control provision of electricity to the one or more electrical sockets (9) according to a schedule determined at least in part according to the received load categorisation information.

5. Energy management apparatus according to claim 4, wherein the one or more processors (26) is further arranged to learn one or more characteristics of a load plugged into one of the electrical sockets (9).

6. Energy management apparatus according to claim 5, wherein the one or more characteristics comprises how much energy the load requires.

7. Energy management apparatus according to claim 5 or claim 6, wherein the one or more characteristics comprises how long the energy is required for.

8. Energy management apparatus according to any of claims 4 to 7, wherein the one or more processors (26) is further arranged such that the schedule is further determined at least in part according to an output level of a local electricity generator (32).

9. Energy management apparatus according to any of claims 4 to 8, wherein the one or more processors (26) is further arranged such that the schedule is further determined at least in part according to a level of energy stored in an energy storage system (34).

10. An energy management arrangement, comprising:

    an energy management apparatus according to any of claims 4 to 9; and
    one or more electrical sockets (9) according to any of claims 1 to 3.

11. An energy management method, comprising:

receiving load categorisation information from one or more electrical sockets (9) according to any of claims 1 to 3; and

one or more processors (26) controlling provision of electricity to the one or more electrical sockets (9) according to a schedule determined at least in part according to the received load categorisation information.

12. A method for managing required output from an electricity supplier (2) supplying electricity via a supply grid (4) to a plurality of entities (11, 12, 13,...100), the method comprising at least one of the entities (11, 12, 13,...100) controlling its energy demand in response to user inputs categorising individual loads at the entity, the user inputs being input at the entity using one more sockets (9) according to any of claims 1 to 3.

13. A method according to claim 12, the method further comprising a first one of the entities (11, 12, 13,...100) exporting electricity in to the supply grid (4) and a second one of the entities (11, 12, 13,...100) importing electricity from the supply grid (4) in response thereto.

14. An energy supply system, comprising:

an electricity supplier (2);
a supply grid (4); and
a plurality of entities (11, 12, 13,...100);
at least some of the entities (11, 12, 13,...100) comprising an energy management arrangement according to claim 10.

15. A program or plurality of programs arranged such that when executed by a computer system or one or more processors it/they cause the computer system or the one or more processors to operate in accordance with the method of any of claims 11 to 13.

# Fig. 1

# Fig. 2

Fig. 3

Energy Demand and Import from the Grid for Period of 24 hours

EP 2 725 452 A1

Fig. 4

Energy Demand and Import from the Grid for Period of 24hours

EP 2 725 452 A1

EP 2 725 452 A1

Fig. 5

Legend:
- 503 — Mc
- 501 — Energy Demanded
- 502 — Energy Imported

Energy in kW per $\mu$

Energy Demand and Import from the Grid for Period of 24 hours

X-axis: 08:00, 16:20, 00:40, 09:00, 17:20, 01:40, 10:00, 18:20, 02:40, 08:00

Y-axis: 0, 0.1, 0.2, 0.3, 0.4, 0.5, 0.6, 0.7, 0.8

501
502
503

Fig. 6

Energy in kW per μ

Energy Demand and Import from the Grid for Period of 24 hours

Fig. 7

Energy Demand and Import from the Grid for Period of 24 hours

## Fig. 8

Energy Demand and Import from the Grid for Period of 24 hours

Fig. 9

EP 2 725 452 A1

Fig. 10

# Fig. 11

| Home No. | Amount Available for Export | Wishes to Import? | Wishes to Export? |
|----------|------------------------------|-------------------|-------------------|
| Home 1   | 10kW                         | —                 | Y                 |
| Home 2   | 0kW                          | Y                 | —                 |
| 3        | 5kW                          | —                 | Y                 |
| 4        | 0kW                          | Y                 | —                 |
| 5        | 5kW                          | —                 | —                 |
| ⋮        | ⋮                            |                   |                   |
| N-1      | 0kW                          | —                 | —                 |
| N        | 10kW                         | —                 | Y                 |

Total Energy Availability   25kW

Allowed Import per Requesting Home   12.5kW

Fig. 12

Europäisches
Patentamt

European
Patent Office

Office européen
des brevets

**EUROPEAN SEARCH REPORT**

Application Number

EP 12 27 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2010/217450 A1 (BEAL JACOB S [US] ET AL) 26 August 2010 (2010-08-26)<br>* paragraph [0008] - paragraph [0195]; figures 2a-19 *<br>----- | 1-6, 10-15<br>7-9 | INV.<br>G06F1/32<br>H02J3/14<br>G06Q50/06 |
| X<br><br>Y | US 2002/024332 A1 (GARDNER JAY WARREN [US]) 28 February 2002 (2002-02-28)<br>* paragraph [0002] - paragraph [0092]; figures 1a-7b *<br>----- | 1-8, 10-15<br>9 | |
| Y | US 2003/050737 A1 (OSANN ROBERT [US] OSANN JR ROBERT [US]) 13 March 2003 (2003-03-13)<br>* paragraph [0028] - paragraph [0028] *<br>----- | 7 | |
| Y | XIONGWEI LIU ET AL: "Microgrid development for properties",<br>5 December 2011 (2011-12-05), INNOVATIVE SMART GRID TECHNOLOGIES (ISGT EUROPE), 2011 2ND IEEE PES INTERNATIONAL CONFERENCE AND EXHIBITION ON, IEEE, PAGE(S) 1 - 7, XP032136584,<br>ISBN: 978-1-4577-1422-1<br>* page 2, column 4, line 12 - page 2, column 4, line 19 *<br>----- | 8,9 | TECHNICAL FIELDS SEARCHED (IPC)<br><br>G06F<br>H02J<br>G06Q |

The present search report has been drawn up for all claims

| Place of search | Date of completion of the search | Examiner |
|---|---|---|
| Munich | 15 February 2013 | Jonda, Sven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 725 452 A1

**ANNEX TO THE EUROPEAN SEARCH REPORT
ON EUROPEAN PATENT APPLICATION NO.**

EP 12 27 5164

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2013

| Patent document cited in search report | Publication date | Patent family member(s) | Publication date |
|---|---|---|---|
| US 2010217450 A1 | 26-08-2010 | CA 2753678 A1<br>EP 2401797 A1<br>US 2010217450 A1<br>WO 2010098824 A1 | 02-09-2010<br>04-01-2012<br>26-08-2010<br>02-09-2010 |
| US 2002024332 A1 | 28-02-2002 | NONE | |
| US 2003050737 A1 | 13-03-2003 | US 2003050737 A1<br>US 2008015740 A1 | 13-03-2003<br>17-01-2008 |

**EP 2 725 452 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20120053741 A1

**Non-patent literature cited in the description**

• Zinc/Bromine Battery. **P. C. BUTLER ; P. A. EIDLER ; P. G. GRIMES ; S. E. KLASSEN ; R. C. MILES.** Handbook of Batteries. 2001, 39.1-39.20

• **X. LIU ; I. CHILVERS ; M. MOKHTAR ; A. BEDFORD ; K. STITT ; J. YAZDANI.** Microgrid Development for Properties. *2nd European Conference on Innovative Smart Grid Technologies,* 2011